# EUROPÄISCHE PATENTSCHRIFT

(11) **EP 3 038 448 B1**
(45) Veröffentlichungstag und Bekanntmachung des Hinweises auf die Patenterteilung: **06.12.2017**
(21) Anmeldenummer: 14752333.6
(22) Anmeldetag: 18.08.2014
(51) Int. Cl.: A01C 7/10, A01C 23/00

(54) **GERÄT ZUM VERTEILEN EINES MISCHFLUIDS**
APPARATUS FOR DISTRIBUTING A MIXED FLUID
APPAREIL DE RÉPARTITION D'UN MÉLANGE DE FLUIDES

(30) Priorität: 26.08.2013 DE 202013007590 U
(43) Veröffentlichungstag der Anmeldung: 06.07.2016
(73) Patentinhaber: Hugo Vogelsang Maschinenbau GmbH, 49632 Essen (DE); Prometheus GmbH & Co. KG, 49624 Löningen-Bunnen (DE)
(72) Erfinder: BLOCK, Karl-Heinz, 49624 Löningen (DE); KRAMPE, Paul, 49632 Essen/ Olbg. (DE); HERTWIG, Martin, 49632 Essen (DE)
(74) Vertreter: Eisenführ Speiser
(86) Internationale Anmeldenummer: PCT/EP2014/067523
(87) Internationale Veröffentlichungsnummer: WO 2015/028326

(56) Entgegenhaltungen:
- EP-A1- 0 079 018
- EP-A1- 0 322 046
- WO-A1-2012/106544
- US-A1- 2012 168 530
- US-B1- 7 450 019

## Beschreibung

Die vorliegende Erfindung betrifft ein Gerät zum Verteilen eines Mischfluids, insbesondere von Gülle oder Flüssigmist, auf landwirtschaftlichen Nutzflächen.

Geräte der vorbezeichneten Art weisen eine Verteilvorrichtung auf, die mindestens einen an eine Zuführung anschließbaren Eingang und eine Mehrzahl Abgänge aufweist, sowie eine Mehrzahl mit den Abgängen verbundener Leitungen zum Verteilen des Mischfluids bzw. Schüttguts auf eine vorbestimmte Arbeitsbreite, wobei die Leitungen an ihrem stromabwärtsseitigen Ende jeweils einen Anschlussabschnitt zur Kopplung mit einer Ausbringvorrichtung aufweisen, wobei die Ausbringvorrichtung insbesondere zum Abgeben des Mischfluids bzw. Schüttguts in Richtung der Nutzflächen eingerichtet ist, und wobei jeweils ein Abgang und die mit dem Abgang verbundene Leitung einen Strömungspfad definieren. Es werden z. T. auch zwei oder drei Gülleschläuche an einem Grubberzinken (Ausbringvorrichtung) zusammengeführt, so dass in solchen Fällen der Strömungspfad von den mehreren Leitungen definiert wird.

Solche Geräte sind insbesondere im Bereich der Mischfluidausbringung bekannt und weit verbreitet, wobei aber auch zum Ausbringen von Saatgut oder Mineraldünger im Wesentlichen die gleiche Fördertechnik benutzt wird.

Geräte zum Verteilen von Gülle oder Klärschlamm sind beispielsweise bekannt aus DE31 43 910, EP 0 322 046 A1, WO2012/106544, oder DE 29 71 5481.

Bei den bekannten Verteilgeräten sind die Förderleitungen zwischen Verteilvorrichtung und Ausbringvorrichtung meistens als Schlauchleitung ausgebildet, die vom Verteiler kommend ein- oder mehrmals umgelenkt werden, bis sie den Anschluss an der Ausbringvorrichtung erreicht haben.

Als Ausbringvorrichtung werden Abgabedüsen, Sprühdüsen, oder auch Injektionseinrichtungen verwendet, mit denen das Mischfluid bzw. Schüttgut wahlweise in Richtung der Oberfläche abgegeben wird, oder gezielt in die Tiefe der Nutzfläche eingearbeitet werden kann. Letzteres ist auch in Form des von der hiesigen Anmelderin bekannten Strip-Till Verfahren bekannt. Aber auch das Ausbringen im freien Auslauf aus den Schläuchen, der sogenannte Schleppschlauchbetrieb, ist weit verbreitet.

Bei den bekannten Verteilgeräten und Ausbringsystemen kann es aufgrund der Fluidzusammensetzung und der langen Leitungslängen zu teilweisen oder vollständigen Verstopfungen im Strömungspfad kommen. Bei Geräten, deren Ausbringvorrichtungen in den Boden eingreifen, kann es beispielsweise bei Rückwärtsfahrten oder aufgrund bestimmter Bodenzusammensetzungen auch im Bereich der Ausbringvorrichtungen zu solchen Verstopfungen kommen. Werden solche Verstopfungen nicht erkannt, führt dies dazu, dass ganze Reihen einer landwirtschaftlichen Nutzfläche, die von den Verteilgeräten an davor vorgesehenen Fahrzeugen abgefahren werden, nicht mit Mischfluid bzw. Schüttgut versorgt werden. Das führt zu Ertragseinbußen im landwirtschaftlichen Betrieb, die unbedingt vermieden werden sollen. Ebenso kann eine unerkannte Verstopfung auch zur Überdüngung anderer Bereiche führen.

Angesichts der in der Branche immer größer werdenden Verteilgeräte mit immer mehr Abgängen von teilweise über Hundert Strömungspfaden mit entsprechenden Leitungen und Ausbringvorrichtungen und steigendem Anteil an direkt in den Boden injizierenden Geräten wird es zunehmend schwerer für den Anwender, Verstopfungen in einzelnen Strömungspfaden zu erkennen, so dass das Risiko von Ertragsausfällen steigt.

Das Dokument EP 0 322 046 A1 benutzt quer zur Strömung installierten Sonden, um Verstopfungen zu erkennen. Diese Art von Installation verursacht Änderungen in der Strömung, welche die Messungen der Sonden beeinflussen können. Der Erfindung lag somit die Aufgabe zugrunde, bei Verteilgeräten der eingangs bezeichneten Art eine Verbesserung anzugeben, die das Risiko von Ertragsausfällen im Betrieb minimiert, sodass eine möglichst geringe Beeinflussung des Strömungsfeldes innerhalb des Stromungspfad erzeugt wird. Die Erfindung löst die ihr zugrunde liegende Aufgabe bei Geräten der eingangs bezeichneten Art in einem ersten Aspekt mittels eines Geräts mit den Merkmalen des Anspruchs 1. Die Erfindung macht sich hierbei die Erkenntnis zunutze, dass die zuverlässigste Art der Erkennung einer Verstopfung im Strömungspfad unmittelbar dort erfolgen kann, wo die Verstopfung selbst auftritt. Dies wird erfindungsgemäß dadurch erreicht, dass die Sonden unmittelbar in die Strömungspfade eingebracht werden, um dort den Förderstrom zu überwachen. Ein besonderer Vorteil der Erfindung zeigt sich darin, dass die von den Sonden abgegebenen Messsignale untereinander verglichen werden, und die Auswerteeinheit das Verstopfen einzelner Leitungen zuverlässig daran erkennen kann, dass einzelne Messsignale durch Signalabweichung aus der Masse der abgeglichenen Messsignale herausstechen. Dieses Vorgehen ist deshalb so zuverlässig, weil eine Vorab-Kalibrierung der Sonden unnötig ist. Beim Ausbringen sowohl von Mischfluid wie beispielsweise Gülle als auch beim Ausbringen von Schüttgut, was technisch gesehen als eine Mischung von Luft oder Gas und Schüttgut aufgefasst werden muss, kommt es aufgrund sich ständig ändernder Betriebsbedingungen zu Schwankungen im Förderstrom. Diese Schwankungen können zum einen der global von der Verteilvorrichtung an alle Leitungen abgegebene Volumenstrom, und zum anderen die Temperatur und Zusammensetzung des Förderguts, oder der Druck des Förderguts sein.

Diese Schwankungen haben auch Einfluss auf die von den Sonden erfassten Messsignale. Diese Schwankungen müssten bei Verwendung einer kalibrierbedürftigen Technik in jene Kalibrierung mit einbezogen werden, was technisch aufwändig erscheint. Da aber erfindungsgemäß die von allen Sonden gelieferten Signale miteinander abgeglichen werden, liefern diese in ihrer Gesamtheit einen mehr oder weniger scharfen "Normalbereich". Sobald aber einzelne Strömungspfade teilweise oder vollständig verstopft werden, werden sich die von den dort jeweils platzierten Sonden erhaltenen Messsignale im Vergleich zu den übrigen Messsignalen der umliegenden Strömungspfade deutlich unterscheiden. Dies wird von der Auswerteeinheit ungeachtet der sonstigen, alle Strömungspfade betreffenden Schwankungen erkannt. Aus diesem Grund ist die erfindungsgemäße Verstopfungserkennung besonders robust.

Vorzugsweise weisen die Sonden jeweils einen mit einer Spannung beaufschlagbaren stromdurchflossenen Leiter auf, der wärmeleitend mit dem Strömungspfade verbunden ist.

Der stromdurchflossene Leiter weist hierbei einen Durchgangswiderstand auf, der sich in Abhängigkeit der Temperatur ändert, insbesondere mit steigender Temperatur zunimmt. Vorzugsweise ist der Durchgangswiderstand als PTC Widerstandselement ausgebildet, das sonst auch zur Strombegrenzung von elektronischen Baugruppen, insbesondere zur Kurzschlusssicherung eingesetzt wird. Der Widerstandswert des Durchgangswiderstands liegt bei 20°C bei etwa 100 Ohm. Bei ca. 60 °C erreicht der Durchgangswiderstand einen stabilen Arbeitspunkt, d.h. der Widerstand ist so groß, dass sich die Temperatur bei 60°C hält. Wird mehr Energie an das vorbeiströmende Fördergut abgeführt, senkt sich der Widerstand und es wird dem System mehr elektrische Energie zugeführt um den Arbeitspunkt bei 60°C zu halten. Dieser Strom (ca. 20 mA bei 12 V) wird vorzugsweise ausgewertet.

Die Arbeitsweise der so ausgebildeten Sonden ist im Wesentlichen die Folgende: Eine Verstopfung im Strömungspfad führt zu einer Störung bzw. Veränderung der Strömung. Somit wird im gesamten Strömungspfad zwischen der Verteilvorrichtung und der Ausbringvorrichtung die quantitative und qualitative Ausbildung der Strömung beeinflusst. Abhängig von der Schwere der Verstopfung ändert sich die Geschwindigkeit und Phasenzusammensetzung der Strömung. Der stromdurchflossene Leiter im Strömungspfad wird aufgrund der angelegten Spannung erwärmt. Weil der stromdurchflossene Leiter ferner mit dem Medium im Strömungspfad thermisch in Kontakt steht, findet bei einem Temperaturunterschied zwischen dem Fördergut (Mischfluid oder Schüttgut) und dem Leiter selbst ein Wärmetransport statt. Der Durchgangswiderstand des stromdurchflossenen Leiters ändert sich in Abhängigkeit des Wärmetransports zwischen dem Leiter und dem Fluid. Bei im Wesentlichen konstanten Strömungsbedingungen im Strömungspfad stellt sich hinsichtlich des im stromdurchflossenen Leiter gemessenen Stroms, seines Widerstands und der Temperatur ein Gleichgewichtszustand ein. Ändert sich aber die zwischen dem stromdurchflossenen Leiter und dem Strömungspfad auftretende Wärmeübergabe durch eine Veränderung der Strömungsgeschwindigkeit, Phasenzusammensetzung und anderer Symptome, die beim Verstopfen des Strömungspfades eintreten, verändert sich dieser Gleichgewichtszustand hin zu einer anderen Stromstärke, weil sich der Widerstand des stromdurchflossenen Leiters ändert.

Demzufolge repräsentieren die jeweils von den Sonden abgegebenen Messsignale vorzugsweise die jeweilige Stromstärke in dem stromdurchflossenen Leiter, und die elektronische Auswerteeinheit ist dazu eingerichtet, aus den aufgenommenen Messsignalen einen Mittelwert zu bilden, einzelne der Messsignale mit dem gebildeten Mittelwert zu vergleichen, und bei Erreichen oder Überschreiten einer vorbestimmten Abweichung von dem gebildeten Mittelwert ein Verstopfungssignal zu erzeugen. Die notwendige Abweichung, um ein solches Verstopfungssignal zu erzeugen, liegt vorzugsweise in einem Bereich von 3% und darüber, vorzugsweise 5% und darüber.

In einer besonders bevorzugten Ausgestaltung der Erfindung weisen die Sonden jeweils ein wärmeleitfähiges Sensorelement auf, welches in einer thermisch leitfähigen Messkappe angeordnet ist. Vorzugsweise ist die Messkappe dazu eingerichtet, das Sensorelement mechanisch von dem Strömungspfad zu isolieren.

Der Werkstoff der Messkappe und/oder des Sensorelements wird vorzugsweise danach ausgewählt, dass sein Wärmedurchgangskoeffizient der Wärmeübertragung mit dem Medium möglichst hoch ist. Dazu muss der Werkstoff der Messkappe eine möglichst hohe Wärmeleitfähigkeit besitzen. Weitere Anforderungen sind mechanische (Abriebs-) und chemische (Korrosions-) Beständigkeit gegen das verwendete Fördergut, des Weiteren gute Bearbeitbarkeit und vertretbare Kosten. Als vorteilhaft hat sich hierbei beispielsweise Messing herausgestellt, da es diese teils konkurrierenden Anforderungen erfüllt.

Unter einer mechanischen Isolierung wird hierbei insbesondere verstanden, dass das Sensorelement vor mechanischer Beschädigung aufgrund von Partikeln im Fördergut geschützt wird.

Zur Signalabgabe von dem Sensorelement an die elektronische Auswerteeinheit ist vorzugsweise ein Anschlusskabel vorgesehen und an das Sensorelement angeschlossen.

Ferner wird vorzugsweise das Anschlusskabel von einem Halteschlauch umhüllt und zugentlastet. Es ist nicht auszuschließen, dass im Betrieb am Sensorelement im Strömungspfad eine Zugbelastung auf die Sonde ausgeübt wird. Durch eine Zugentlastung wird die Beschädigung des Sensorelementes oder schlimmstenfalls die Unterbrechung des vom Strom durchflossenen Leiter gebildeten Stromkreises verhindert.

Der Halteschlauch der Sonde weist vorzugsweise im Vergleich zum Sensorelement und Anschlusskabel eine verminderte Wärmeleitfähigkeit auf. Besonders bevorzugt liegt die Wärmeleitfähigkeit im Bereich von 0,5 W/Km oder weniger, vorzugsweise 0,3 W/Km oder weniger. Ein beispielhafter Halteschlauch in Form eines Druckluftschlauchs aus Polyurethan mit einem Außendurchmesser von 4 mm und einer Wandstärke von 0,75 mm weist eine Wärmeleitfähigkeit von etwa 0,25 W/Km auf.

Die verminderte Wärmeleitfähigkeit des Halteschlauchs hat insbesondere den Vorteil, dass mit ihr Einflüsse von der Umgebung auf das Sensorelement abgemildert werden. Der Halteschlauch, der das Anschlusskabel vollständig umhüllt, stellt die Schnittstelle zwischen der Sonde und der Umgebung dar, weil der Halteschlauch an irgendeiner Stelle aus dem Strömungspfad herausgeführt werden muss. Je besser der Halteschlauch eine Wärmeübertragung verhindert, desto geringer sind die Umwelteinflüsse von außerhalb des Strömungspfades auf die Sonde.

In einer bevorzugten Weiterbildung der Erfindung erstreckt sich die Sonde mit einer Länge im Bereich von 10 bis 50 cm, besonders bevorzugt im Bereich von 20 bis 30 cm in den Strömungspfad stromabwärts. Ein Vorteil der Ausrichtung der Sonde in dieser Weise wird darin gesehen, dass eine möglichst geringe Beeinflussung des Strömungsfeldes innerhalb des Strömungspfads erzeugt wird. Eine Beabstandung der Sonde von ihrer eigentlichen Eintrittsstelle ist auch deswegen vorteilhaft, weil beispielsweise im Bereich der Fluid- bzw. Schüttgutabgänge im Bereich der Verteilvorrichtung im Verstopfungsfall eine Strömungsrezirkulation einsetzen kann, die der Sonde folglich zunächst eine "normale" Strömung vermittelt, obwohl weiter stromabwärts bereits eine Verstopfung eingetreten ist. Ein Beabstanden der Sondenspitze, die beispielsweise durch die Messkappe gebildet werden kann, von der eigentlichen Eintrittsstelle ermöglicht es also, den für die Messung aktiven Bereich der Sonde an die Stelle zu verlegen, wo tatsächlich eine Verstopfung ungeachtet eventueller Strömungsrezirkulation erwartet wird. Die Messstelle kann mit anderen Worten an einen Ort gelegt werden, an dem die Strömungsveränderungen bei einer Verstopfung ausgeprägt und gut messbar sind.

Bei der Einbringung der Sonde in den Strömungspfad ist darauf zu achten, dass negative Beeinflussungen des Strömungsbildes im Strömungspfad möglichst verhindert werden. Hierbei soll auf Kanten verzichtet werden, die gegen die Strömungsrichtung hervorstehen, auch um ein Verhaken von Fremdkörpern und Faserstoffen möglichst zu vermeiden. Dementsprechend wird vorzugsweise entlang jeweils eines Strömungspfades ein Schlauchstutzen mit einem Anschlussabschnitt vorgesehen, auf den die Fluid- bzw. Schüttgutleitung aufgeschoben ist, wobei die Sonde mit einem Abschnitt des Halteschlauchs zwischen der Fluid- bzw. Schüttgutleitung und dem Schlauchstutzen hindurchgeführt ist, und wobei die Fluid- bzw. Schüttgutleitung den Schlauchstutzen und den Halteschlauch fluiddicht umschließt.

Vorzugsweise ist der jeweilige Schlauchstutzen an einem der Fluid- bzw. Schüttgutabgänge der Verteilvorrichtung, oder an einem der Anschlussabschnitte zur Kopplung mit der Ausbringvorrichtung, oder an einer Stelle entlang der Fluidleitung angeordnet.

Bei Ausbringvorrichtungen und Verteilgeräten, die beispielsweise mit der CFC-Technologie der Hugo Vogelsang GmbH (CFC = ComfortFlowControl) ausgerüstet sind, sind solche Schlauchstutzen ohnehin vorhanden, so dass diese Systeme mit besonders geringem Aufwand auch nachgerüstet werden können, um eine erfindungsgemäße Verstopfungserkennung zu erhalten.

Alternativ kann die Sonde auch in das Verteilgerät eingebracht sein, indem jeweils entlang eines Strömungspfades eine an den Halteschlauch angepasste Bohrung angeordnet ist, durch welche die Sonde mit einem Abschnitt des Halteschlauchs hindurchgeführt ist, wobei die Bohrung und der Halteschlauch vorzugsweise fluiddicht gegeneinander anliegen.

Die vorstehend genannten bevorzugten Ausführungsformen gelten gleichermaßen für Geräte zum Verteilen von Mischfluid wie beispielsweise Gülle, aber auch für Geräte zum Verteilen von Schüttgut wie beispielsweise Saatgut oder Mineraldünger. Wenn im Folgenden jeweils nur von einem dieser beiden Anwendungsfälle gesprochen wird, so ist hierunter auch zu verstehen, dass die entsprechenden Ausführungen für den anderen Anwendungsfall auch Gültigkeit haben.

In einer bevorzugten Ausgestaltung ist die elektronische Auswerteeinheit dazu eingerichtet, die von den Sonden abgegebenen Messsignale aufzunehmen, untereinander abzugleichen, und aufgrund von hierbei festgestellten Signalabweichungen Abweichungen in der Verteilgenauigkeit zu identifizieren. Alternativ oder zusätzlich zu einer Verstopfungserkennung ist die Vorrichtung gemäß der Erfindung in der Lage, qualitativ zu erfassen, ob und wie stark die Fördermenge in einzelnen Strömungspfaden von der Fördermenge in anderen Strömungspfaden abweicht. Hierzu macht sich die Erfindung die gleiche Erkenntnis zunutze, wie eingangs mit Bezug auf die Verstopfungserkennung ausgeführt wurde. Die Abweichungen untereinander können mittels Signalabgleich festgestellt werden, ohne hierfür jeden Sensor für jedes Medium und jegliche Betriebsparameter eichen zu müssen, was für eine Absolutmessung erforderlich wäre. Sobald ein vorbestimmter Variationskoeffizient nicht mehr eingehalten wird, ist die Auswerteeinheit vorzugsweise dazu eingerichtet, die abweichenden Strömungspfade kenntlich zu machen, damit beispielsweise eine Umstellung der Arbeitsweise des angeschlossenen Verteilers vorgenommen werden kann.

Die Erfindung befasst sich gemäß einem bevorzugten Aspekt mit einer verbesserten Platzierung der Sonde in der Fluidleitung des erfindungsgemäßen Geräts. Gemäß diesem zweiten Aspekt lag der Erfindung insbesondere zusätzlich die Aufgabe zugrunde, es dem Benutzer zu erleichtern, eine Sonde in den Strömungspfad der jeweiligen Leitung einzubringen.

Die Erfindung löst die Aufgabe gemäß diesem Aspekt, indem um mindestens eine, vorzugsweise mehrere oder sämtliche der Leitungen eine Schelle herum montiert ist, wobei die Schelle einen sich durch eine korrespondierende Öffnung in der Leitung hindurch in den Strömungspfad erstreckenden Vorsprung aufweist. Die Schelle weist vorzugsweise einen Schnellverschluss, beispielsweise einen Schnappverschluss, zum einhändigen Öffnen und Schließen der Schelle auf.

Alternativ oder zusätzlich weist die Schelle vorzugsweise einen ersten Verbindungsabschnitt mit einer Außenverzahnung, und einen zweiten Verbindungsabschnitt mit einer hiermit korrespondierenden Innenverzahnung auf. Der Abschnitt mit der Innenverzahnung ist vorzugsweise dazu ausgebildet, den korrespondierenden Abschnitt mit der Außenverzahnung in sich aufzunehmen und die Verzahnungen in einer Rastposition zu halten.

Gemäß einer ersten bevorzugten Weiterbildung ist die Schelle als Einführschelle für eine Sonde mit Halteschlauch gemäß einer der vorstehend beschriebenen bevorzugten Ausführungsformen des Geräts gemäß dem ersten Aspekt ausgebildet.

Hierzu ist es besonders bevorzugt, wenn die Schelle einen Einführabschnitt zur Aufnahme der Sonde und eine sich bis zum Vorsprung erstreckende, insbesondere durchgängige, Durchführung für die Sonde aufweist. Ferner weist die Schelle gemäß dieser Ausführungsform vorzugsweise Klemmmittel zum Arretieren des Halteschlauchs in der Durchführung auf.

Eine derartige, als Einführschelle ausgebildete Schelle ist besonders für die Verwendung in Fluidleitungen zum Ausbringen von Gülle und dergleichen geeignet. Es hat sich herausgestellt, dass die Messkappen der Sonden mit Halteschlauch für diesen Einsatzzweck die beste Messwertauflösung liefern, wenn sie in einem bestimmten Abstand zur Schelle angeordnet sind.

Gemäß einer alternativen bevorzugten Ausgestaltung der Erfindung gemäß dem bevorzugten Aspekt ist der Vorsprung der Schelle als thermisch leitfähige Messkappe ausgebildet und besteht vorzugsweise abschnittsweise oder vollständig aus einem Metall, insbesondere aus einem Hartmetall. In dieser Ausführungsform dient die Schelle mit Ihrem Vorsprung unmittelbar als Sonde. Genauer gesagt ist der Vorsprung als Sondenkopf ausgestaltet.

In dieser Ausführungsform weist die Schelle vorzugsweise eine Aufnahme für den stromdurchflossenen Leiter und das wärmeleitfähige Sensorelement auf, die vorstehend mit Bezug auf die bevorzugten Ausführungsformen des ersten Aspekts näher beschrieben wurden. Das wärmeleitfähige Sensorelement ist weiter vorzugsweise thermisch leitend mit der Messkappe verbunden.

Die Erfindung wird im Folgenden unter Bezugnahme auf die beigefügten Figuren anhand bevorzugter Ausführungsbeispiele näher beschrieben. Hierbei zeigen:
- Figur 1: ein erfindungsgemäßes Verteilgerät gemäß dem ersten Aspekt mit daran angeschlossenen Ausbringvorrichtungen,
- Figur 2: eine Detailansicht einer Sonde der Einrichtung zur Verstopfungserkennung,
- Figuren 3a-c: verschiedene Einbauszenarien der Sonde gemäß Figur 2 in dem Verteilgerät gemäß dem bevorzugten Ausführungsbeispiel,

- Figuren 4a, b: schematische räumliche Darstellungen einer Schelle gemäß einer ersten Ausgestaltung des zweiten Aspekts, und
- Figur 5: eine schematische Darstellung einer Schelle gemäß einer zweiten Ausgestaltung des zweiten Aspekts.

Der strukturelle Aufbau des im Folgenden näher beschriebenen Gerätes ist für den Anwendungsfall der Mischfluidförderung im Wesentlichen der Gleiche wie für den Anwendungsfall der Schüttgutförderung.

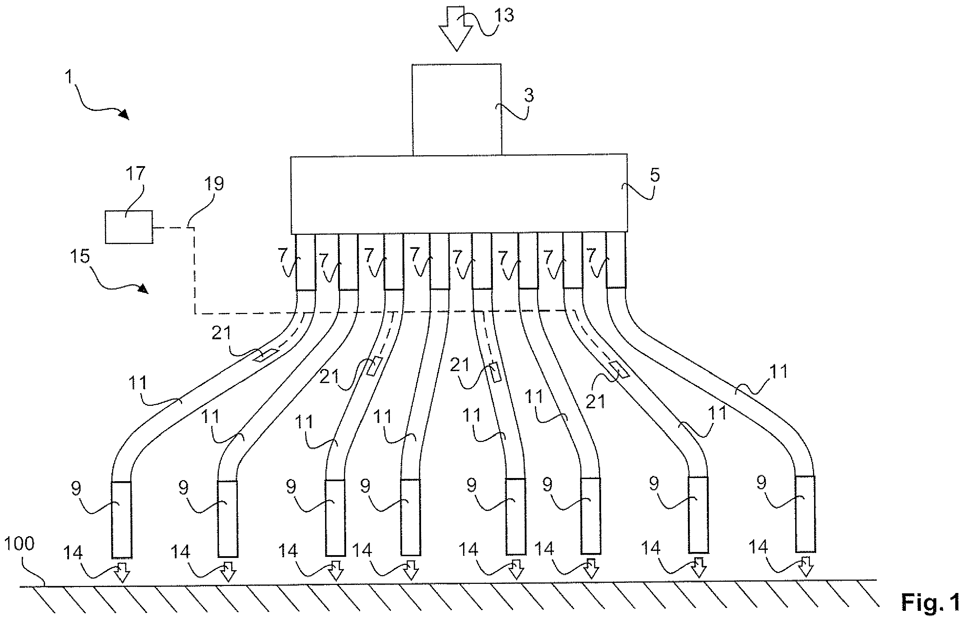

Figur 1 zeigt eine schematische Darstellung eines erfindungsgemäßen Verteilergerätes nach einem bevorzugten Ausführungsbeispiel.

Das in Figur 1 gezeigte Gerät 1 weist eine Verteilvorrichtung 5 auf. Die Verteilvorrichtung 5 weist einen (Mischfluid- bzw. Schüttgut-) Eingang 3 zum Anschluss an eine Fördergutzuführung (für Mischfluide bzw. Schüttgüter) auf. Die Verteilvorrichtung 5 kann eine Verteilvorrichtung bekannter Art sein und umfasst Mittel zum Dosieren und gleichmäßigen Verteilen des zugeführten Fördergutes an eine Vielzahl von (Mischfluid- bzw. Schüttgut-) Abgängen 7.

An das Gerät 1 ist eine Vielzahl von Ausbringvorrichtungen 9 angeschlossen. Die Ausbringvorrichtungen 9 sind mit den Abgängen 7 jeweils mittels einer (Mischfluid- bzw. Schüttgut-) Leitung 11 verbunden. Durch die Abgänge 7 und Leitungen 11 ist eine Vielzahl von Strömungspfaden von der Verteilvorrichtung 5 zu den Ausbringvorrichtungen 9 definiert.

Die Ausbringvorrichtungen 9 sind dazu eingerichtet, nach allgemein bekannter Art das geförderte Gut (Mischfluid oder Schüttgut) in Richtung der Pfeile 14 auf eine landwirtschaftliche Nutzfläche 100 abzugeben. Dies bedingt, dass dem Gerät 1 zuvor entsprechendes Fördergut in Richtung des Pfeils 13 zugeführt wird.

Das Gerät 1 gemäß Figur 1 weist ferner eine Einrichtung 15 zur Verstopfungserkennung auf. Die Einrichtung 15 zur Verstopfungserkennung umfasst eine elektronische Auswerteeinheit 17 und eine Mehrzahl Sonden 21. Die Sonden 21 sind mittels Leitungen 19 kommunizierend mit der elektronischen Auswerteeinheit 17 verbunden. Je nachdem, ob die Sonden 21 einen eigenen Signalwandler aufweisen oder nicht, können die Leitungen 19 als Strom- oder Datenleitung ausgebildet sein. Die Sonden 21 sind jeweils in einen Strömungspfad eingebracht und dazu ausgelegt, ein vom Förderstrom im Strömungspfad abhängiges Messsignal abzugeben. Die elektronische Auswerteeinheit 17 ist dazu eingerichtet, die von den Sonden 21 abgegebenen Messsignale aufzunehmen, untereinander abzugleichen und aufgrund von hierbei festgestellten Signalabweichungen einzelne oder mehrere Strömungspfade als verstopft zu identifizieren.

In dem in Figur 1 gezeigten Ausführungsbeispiel sind nicht alle Strömungspfade mit Sonden 21 versehen, sondern nur einige. Je nach Umfang der Menge an Strömungspfaden, die an dem Gerät 1 vorgesehen sind, kann es sinnvoll sein, entweder alle Strömungspfade mit Sonden zu versehen, oder jeweils mehrere Strömungspfade zu bündeln und innerhalb dieser Bündel nur einen Strömungspfad mit einer Sonde zu versehen, um Kosten zu sparen. Dies kann insbesondere in Anwendungsfällen Sinn machen, wo erfahrungsgemäß nicht bloß eine Ausbringvorrichtung oder nur ein Strömungspfad verstopfen, sondern erfahrungsgemäß immer gleich mehrere nebeneinanderliegende zumindest teilweise verstopfen.

Eine bestmögliche Informationsdichte erhält man allerdings, wenn jeder Strömungspfad mindestens eine Sonde aufweist.

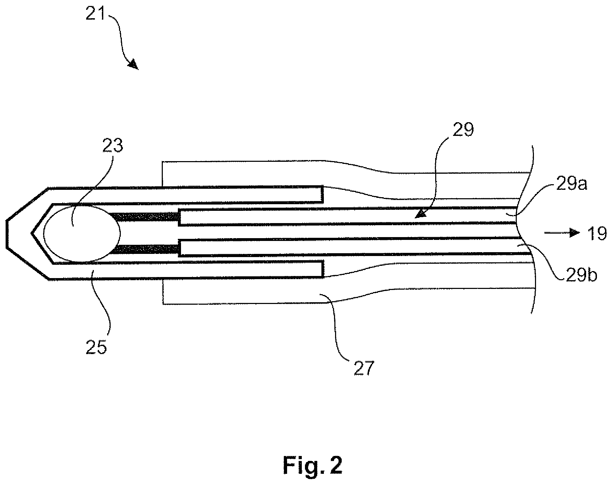

In Figur 2 ist ein Detail einer Sonde 21 gemäß Figur 1 gezeigt. Die Sonde 21 weist ein Sensorelement 23 auf, welches zum Wärmeaustausch mit dem die Sonde 21 umgebenden Fördergut (Mischfluid oder Schüttgut) eingerichtet ist. Das Sensorelement 23 ist von einer Messkappe 25 eingehaust, die das Sensorelement 23 vor mechanischen Beeinträchtigungen schützen soll. Die Messkappe 25 ist ebenfalls ausreichend wärmeleitfähig, und weist ggfs. ein Messfenster für das Sensorelement zum vereinfachten Kontaktieren des Förderguts im Strömungspfad auf.

Die Sonde 21 weist einen stromdurchflossenen Leiter 29 auf, der vorzugsweise durch zwei Adern 29a, b eines Anschlusskabels ausgebildet ist. Das Anschlusskabel 29a, b ist zur Signalabgabe an die elektronische Auswerteeinheit mit der Leitung 19 verbunden (Figur 1).

Ein Teil der Messkappe 25 sowie des Anschlusskabels 29a, b ist von einem Halteschlauch 27 umhüllt und fluiddicht abgeschlossen. Vorzugsweise ist das Anschlusskabel 29a, b zugentlastet innerhalb des Halteschlauchs 27 angeordnet. Der Halteschlauch 27 ist ferner vorzugsweise dazu eingerichtet, die Sonde 21 thermisch von ihrer Umgebung außerhalb des Strömungspfades zu isolieren.

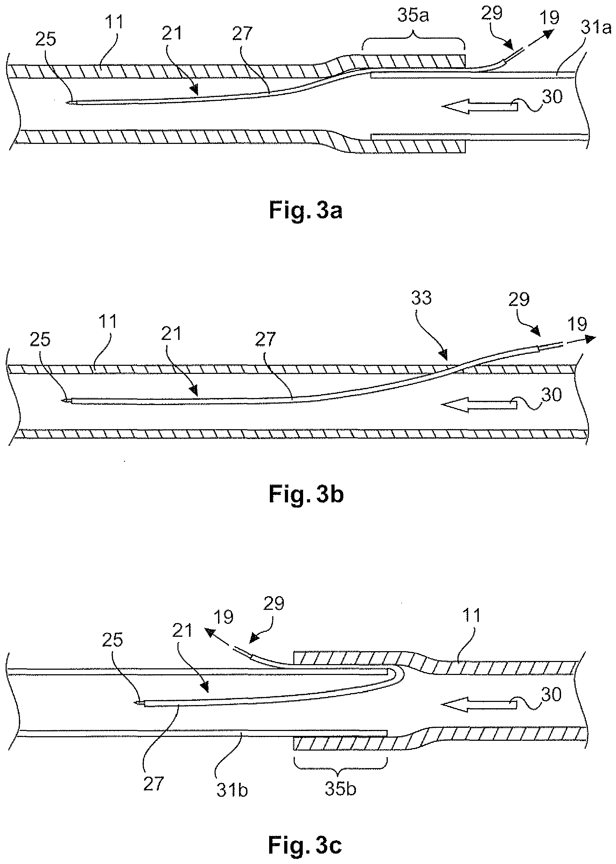

Verschiedene Einbringungsmöglichkeiten der Sonde 21 in den Strömungspfad sind in den Figuren 3a bis c dargestellt.

Figur 3a zeigt eine erste bevorzugte Einbringungsmöglichkeit der Sonde 21 in den Strömungspfad. Die Sonde 21 ist hierbei in einen Anschlussabschnitt 35a zwischen einem Schlauchstutzen 31a und der (Mischfluid- oder Schüttgut-) Leitung 11 hindurch in den Strömungsabschnitt eingeführt. Der Schlauchstutzen 31a ist hierbei vorzugsweise an einem (Mischfluid oder Schüttgut-) Abgang der Verteilvorrichtung angeordnet.

Die Sonde 21 erstreckt sich von der Einbringungsstelle stromabwärts in Richtung des Pfeils 30 entlang des Strömungspfades. Der Halteschlauch 27 isoliert die Sonde 21 thermisch von der Leitung 11 und dem Schlauchstutzen 31a. Die Messkappe 25 ist vorzugsweise so weit von dem Anschlussabschnitt 35a beabstandet, dass eine möglicherweise im Falle einer Verstopfung in der Nähe des Schlauchstutzens 31a auftretende Zirkelströmung die Messkappe 25 der Sonde 21 nicht erreicht.

Figur 3b zeigt im Wesentlichen die gleichen strukturellen Elemente bezüglich des Strömungspfades und der Sonde 21. Im Unterschied zum Aufbau gemäß Figur 3a ist die Sonde 21 allerdings nicht an einem Schlauchstutzen, sondern an einer im Prinzip beliebig wählbaren Stelle entlang des Strömungspfades durch eine angepasste Bohrung 33 (nicht im Detail dargestellt) in den Strömungspfad eingeführt. Der Halteschlauch 27 liegt vorzugsweise fluiddicht in der Bohrung 33.

Wie in Figur 3a ist das Anschlusskabel des stromdurchflossenen Leiters 29 aus dem Strömungspfad herausgeführt und (in nicht dargestellter Weise) mit der Leitung 19 zur Auswerteeinheit 17 hin verbunden (Figur 1).

In der Konstellation gemäß Figur 3c ist die Sonde 21 in einem Anschlussabschnitt 35b eines Schlauchstutzens 31b zwischen dem Schlauchstutzen 31b und der Leitung 11 hindurchgeführt. Der Schlauchstutzen 31b ist vorzugsweise an einem Anschlussabschnitt zur Kopplung mit einer Ausbringvorrichtung angeordnet. Die Sonde 21 wird nach dem Einbringen in Richtung des Strömungspfades stromabwärts umgelenkt und erstreckt sich sodann in dessen Richtung. Ansonsten ähnelt der strukturelle Aufbau demjenigen aus Figur 3a.

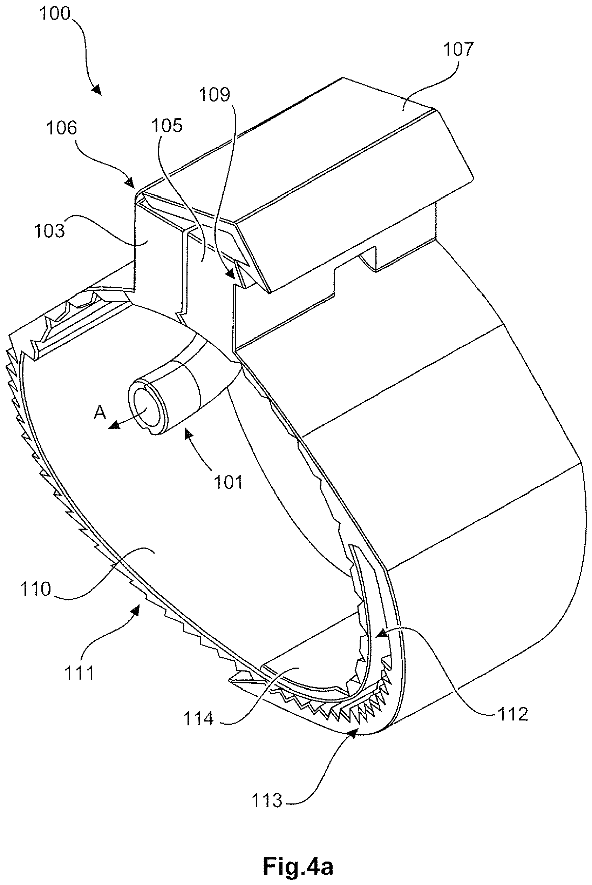

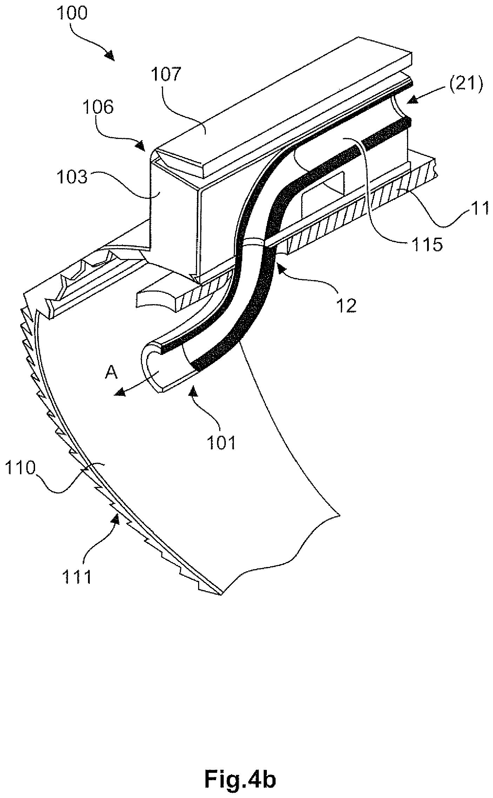

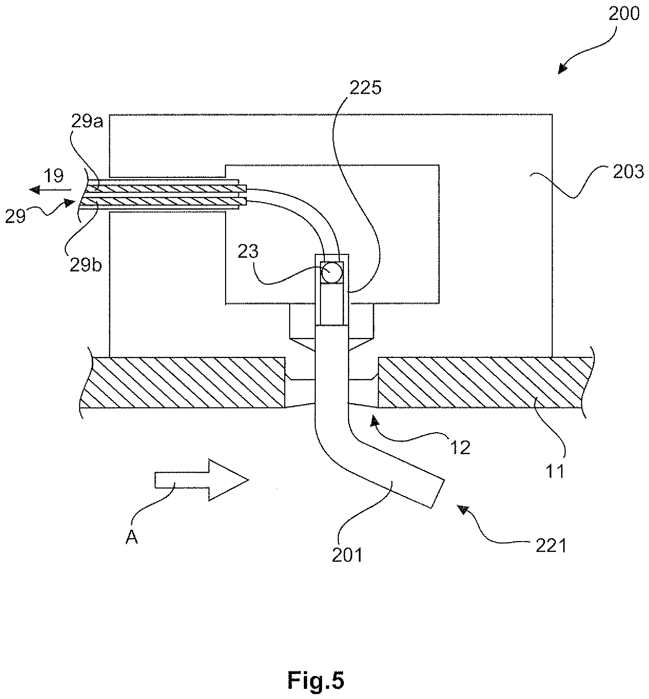

Nachdem vorstehend die Erfindung in erster Linie mit Bezug auf den ersten Aspekt erörtert wurde, widmen sich die Figuren 4a, b und 5 den zweiten Aspekt der Erfindung. Die Figuren 4a, b zeigen eine Schelle 100, welche um eine Leitung 11, beispielsweise Mischfluidleitung oder Schüttgutleitung, herum montierbar ist. In Figur 4b ist eine solche Leitung 11 angedeutet.

Identische Bezugszeichen tragen dieselbe Funktion wie bei der Sonde 21 gemäß den Figuren 1 - 3.

Die Schelle 100 weist einen Grundkörper mit einer ersten Grundkörperhälfte 103 und einer zweiten Grundkörperhälfte 105 auf. Ferner weist die Schelle 100 einen Vorsprung 101 auf.

Der Vorsprung 101 ist im Wesentlichen hälftig jeweils an einer der beiden Grundkörperhälften 103, 105 angeformt und wird beim Zusammensetzen der beiden Grundkörperhälften 103, 105 mit diesen gleichsam vervollständigt. Der Vorsprung 101 erstreckt sich stromabwärts in Richtung des Pfeils A.

Die erste Grundkörperhälfte 103 weist ein Scharnier 106 auf, an weichem ein Schnapper 107 federnd schwenkbar angeordnet ist. Der Schnapper 107 ist dazu eingerichtet, einen korrespondierenden Vorsprung 109 an der zweiten Grundkörperhälfte 105 zu hintergreifen und auf diese Weise einen Schnellverschluss der Schelle 100 zu bilden.

Die Schelle 100 weist ferner einen Rastverschluss zum Anpassen des Innendurchmessers der Schelle 100 an die jeweils mit Sonde zu versehende Leitung 11 auf. Der Rastverschluss weist eine an der ersten Grundkörperhälfte 103 angeformte Rastzunge 110 mit einer Außenverzahnung 111 und eine korrespondierende Rastzungenaufnahme 112 auf, die an der zweiten Grundkörperhälfte 105 angeordnet ist. Die Rastzungenaufnahme 112 weist eine mit der Außenverzahnung 111 der Rastzunge 110 korrespondierende Innenverzahnung 113 auf. Ferner weist die Rastzungenaufnahme 112 einen Stützabschnitt 114 auf, der gegenüberliegend der Außenverzahnung 113 angeordnet ist und, sich nach innen gegen die Leitung 11 abstützend, die Außen- und Innenverzahnung 111, 113 miteinander in Eingriff hält, wenn die Schelle 100 um die Leitung 11 herum montiert ist.

Die Schelle 100 ist vorzugsweise zur Einhandbedienung mittels der vorstehend genannten Verschlüsse ausgebildet und weist eine Durchführung 115 auf. Die Durchführung 115 erstreckt sich durch den Grundkörper 103, 105 hindurch vollständig bis zum Ende des Vorsprungs 101 und ist dazu angepasst, eine Sonde wie beispielsweise die Sonde 21 gemäß dem ersten Aspekt aufzunehmen und ihre Durchführung bis in den Strömungspfad zu gewährleisten.

Der Vorsprung 101 ist durch eine Öffnung 12 in der Leitung 11 durchgeführt und erstreckt sich in den Strömungspfad hinein. Die Schelle 100 gemäß Figuren 4a,b eignet sich in besonderer Art und Weise für den Einsatz in der Verstopfungserkennung von Mischfluidleitungen.

Figur 5 zeigt ein weiteres Ausführungsbeispiel einer Schelle 200 gemäß dem zweiten Aspekt der Erfindung. Die Schelle 200 ist vorzugsweise strukturell analog aufgebaut wie die Schelle 100 der Figuren 4a,b, was das Vorsehen von Schnappverschluss und Rastverbindung etc. angeht. Diesbezüglich wird auf die vorstehenden Erläuterungen zu den Figuren 4a,b verwiesen.

Die Schelle 200 weist einen Vorsprung 201 auf. Der Vorsprung 201 ist im Unterschied zu der Schelle 100 allerdings nicht bloß zur Durchführung einer separaten Sonde, wie beispielsweise der Sonde 21, angepasst, sondern bildet den Sondenkopf einer Sonde 221. Der Vorsprung 201 dient als thermisch leitfähige Messkappe 225, die mit einem Sensor 23 thermisch leitend verbunden ist, wobei der Sensor 23 vorzugsweise strukturell gleich aufgebaut ist wie bei der Sonde 21 des Geräts gemäß dem ersten Aspekt.

Die Sonde 200 weist einen Grundkörper 203 auf, der in Figur 5 um eine Leitung 11, insbesondere eine Schüttgutleitung, herum montiert ist. Die Platzierung der Sonde 200 ist derart gewählt, dass der Vorsprung 201 durch eine korrespondierende Öffnung 12 hindurchgeführt ist und sich in den Strömungspfad, vorzugsweise stromabwärts, erstreckt. Die Sonde 221 weist einen mit einer Spannung beaufschlagbaren stromdurchflossenen Leiter 29 mit Anschlusskabeln 29a,b zum Anschluss an eine elektronische Auswerteinheit auf.

Die Sonde 221 in der Schelle 200 ist, insbesondere dann, wenn der Vorsprung 201 als Hartmetallspitze ausgeführt ist, in besonderem Maße für die Verwendung zur Verstopfungserkennung in Schüttgutleitungen geeignet.

## Patentansprüche

1. Gerät (1) zum Verteilen eines Mischfluids, insbesondere von Gülle oder Flüssigmist, auf landwirtschaftliche Nutzflächen (100), mit
- einer Verteilvorrichtung (5), die mindestens einen an eine Mischfluidzuführung anschließbaren Fluideingang (3) und eine Mehrzahl Fluidabgänge (7) aufweist,
- einer Mehrzahl mit den Fluidabgängen verbundener Fluidleitungen (11) zum Verteilen des Mischfluids auf eine vorbestimmte Arbeitsbreite, wobei die Fluidleitungen (11) an ihrem stromabwärtsseitigen Ende jeweils einen Anschlussabschnitt (35b) zur Kopplung mit einer Ausbringvorrichtungen (9) aufweisen, wobei die Ausbringvorrichtung (9) insbesondere zum Abgeben des Mischfluids in Richtung der Nutzflächen (100) eingerichtet ist,
- wobei jeweils ein Fluidabgang (7) und die mit dem Fluidabgang verbundene Fluidleitung (11) einen Strömungspfad definieren, **gekennzeichnet durch** eine Einrichtung (15) zur Verstopfungserkennung in einzelnen, mehreren oder sämtlichen Strömungspfaden, welche
- eine Mehrzahl von Sonden (21), die jeweils in einen der Strömungspfade eingebracht und dazu ausgelegt sind, ein vom Förderstrom im Strömungspfad abhängiges Messsignal abzugeben, sowie
- eine elektronische Auswerteeinheit (17) aufweist, die dazu eingerichtet ist, die von den Sonden (21) abgegebenen Messsignale aufzunehmen, untereinander abzugleichen, und aufgrund von hierbei festgestellten Signalabweichungen einzelne oder mehrere Strömungspfade als verstopft zu identifizieren, **dadurch gekennzeichnet, dass** die Sonden (21) von der es Eintritts in den Stromungspfad aus Stromabwärts gerichtet sind.

2. Gerät (1) nach Anspruch 1,
wobei die Sonden (21) jeweils einen mit einer Spannung beaufschlagbaren stromdurchflossenen Leiter (29) aufweisen, der wärmeleitend mit dem Strömungspfad verbunden ist.

3. Gerät (1) nach Anspruch 2,
wobei der stromdurchflossene Leiter (29) einen Durchgangswiderstand aufweist, der sich in Abhängigkeit der Temperatur ändert, insbesondere mit steigender Temperatur zunimmt.

4. Gerät (1) nach Anspruch 2 oder 3,
wobei die jeweils von den Sonden (21) abgegebenen Messsignale die jeweilige Stromstärke in dem stromdurchflossenen Leiter (29) repräsentieren, und die elektronische Auswerteeinheit (17) dazu eingerichtet ist, aus den aufgenommenen Messsignalen einen Mittelwert zu bilden, einzelne der Messsignale mit dem gebildeten Mittelwert zu vergleichen, und bei Erreichen oder Überschreiten einer vorbestimmten Abweichung von dem gebildeten Mittelwert ein Verstopfungssignal zu erzeugen.

5. Gerät (1) nach einem der vorstehenden Ansprüche,
wobei die Sonden (21) jeweils ein wärmeleitfähiges Sensorelement (23) aufweisen, welches in einer thermisch leitfähigen Messkappe (25) angeordnet ist, wobei die Messkappe (25) dazu eingerichtet ist, das Sensorelement (23) mechanisch von dem Strömungspfad zu isolieren.

6. Gerät (1) nach einem der vorstehenden Ansprüche,
wobei zur Signalabgabe an die elektronische Auswerteeinheit (17) ein Anschlusskabel (29a,b) an das Sensorelement (23) angeschlossen ist.

7. Gerät (1) nach Anspruch 6,
wobei das Anschlusskabel (29a,b) von einem Halteschlauch (27) umhüllt und vorzugsweise zugentlastet ist.

8. Gerät (1) nach Anspruch 7,
wobei der Halteschlauch (27) eine im Vergleich zum Sensorelement (23) und Anschlusskabel (29a,b) verminderte Wärmeleitfähigkeit aufweist.

9. Gerät (1) nach einem der vorstehenden Ansprüche, wobei die Sonde (21) sich mit einer Länge im Bereich von 10 bis 50 cm, besonders bevorzugt im Bereich von 20 bis 30 cm in dem Strömungspfad stromabwärts erstreckt.

10. Gerät (1) nach einem der Ansprüche 6 bis 9,
wobei entlang jeweils eines Strömungspfades ein Schlauchstutzen (31a,b) mit einem Anschlussabschnitt (35a,b) vorgesehen ist, auf den die Fluidleitung (11) aufgeschoben ist, wobei die Sonde (21) mit einem Abschnitt des Halteschlauchs (27) zwischen der Fluidleitung (11) und dem Schlauchstutzen (31a,b) hindurchgeführt ist, und wobei die Fluidleitung (11) den Schlauchstutzen (31a,b) und den Halteschlauch (27) fluiddicht umschließt.

11. Gerät (1) nach Anspruch 10,
wobei jeweils der Schlauchstutzen (31a,b) an einem der Fluidabgänge der Verteilvorrichtung (5), oder an einem der Anschlussabschnitte (35a,b) zur Kopplung mit der Ausbringvorrichtung (9), oder an einer Stelle entlang der Fluidleitung (11) angeordnet ist.

12. Gerät (1) nach einem der Ansprüche 6 bis 9,
wobei entlang jeweils eines Strömungspfades eine an den Halteschlauch (27) angepasste Bohrung (33) angeordnet ist, durch welche die Sonde (21) mit einem Abschnitt des Halteschlauchs (27) hindurchgeführt ist, wobei die Bohrung (33) und der Halteschlauch (27) vorzugsweise fluiddicht gegeneinander anliegen.

13. Gerät nach einem der vorstehenden Ansprüche,
wobei die elektronische Auswerteeinheit dazu eingerichtet ist, die von den Sonden abgegebenen Messsignale aufzunehmen, untereinander abzugleichen, und aufgrund von hierbei festgestellten Signalabweichungen Abweichungen in der Verteilgenauigkeit zu identifizieren.

14. Gerät nach einem der vorstehenden Ansprüche,
mit mindestens einer Schelle (100,200), welche um eine der Leitungen (11,) herum montiert ist,
wobei die Schelle einen sich durch eine korrespondierende Öffnung (12) in der Leitung (11) hindurch in den Strömungspfad erstreckenden Vorsprung (101,201) aufweist.

15. Gerät nach Anspruch 14,
wobei die Schelle (100) einen Einführabschnitt zur Aufnahme der Sonde (21) und eine sich bis zum Vorsprung (101) erstreckende Durchführung (115) für die Sonde (21) aufweist.

16. Gerät nach Anspruch 14,
wobei der Vorsprung (221) der Schelle (200) als thermisch leitfähige Messkappe (225) ausgebildet ist und vorzugsweise abschnittsweise oder vollständig aus einem Metall, insbesondere Hartmetall besteht.

## Claims

1. Apparatus (1) for distributing a mixed fluid, in particular liquid manure or slurry manure on agricultural productive surfaces (100) comprising
- a distribution device (5) having at least one fluid inlet (3) which can be connected to a mixed fluid supply and a plurality of fluid outlets (7),
- a plurality of fluid conduits (11) connected to the fluid outlets for distribution of the mixed fluid on to a predetermined working width, wherein the fluid conduits (11) at their downstream end each have a respective connecting portion (35b) for coupling to an application device (9), wherein the application device (9) is adapted in particular for discharge of the mixed fluid in the direction of the productive surfaces (100),
- wherein a fluid outlet (7) and the fluid conduit (11) connected to the fluid outlet define a respective flow path,
**characterised by** a device (15) for blockage detection in individual ones, a plurality of or all flow paths, which has
- a plurality of sensors (21) which are respectively introduced into one of the flow paths and are adapted to output a measurement signal, dependent on the delivery flow in the flow path, and
- an electronic evaluation unit (17) which is adapted to receive the measurement signals output by the sensors (21), compare them to each other and on the basis of signal deviations determined in that case to identify individual ones of or a plurality of flow paths as blocked, **characterised in that** the sensors (21) are directed from a location of their entry into the respective flow path in a downstream direction.

2. Apparatus (1) according to claim 1 wherein the sensors (21) each have a current-carrying conductor (29) which can be acted upon with a voltage and which is connected to the flow path in heat-conducting relationship.

3. Apparatus (1) according to claim 2 wherein the current-carrying conductor (29) has a volume resistance which changes in dependence on temperature and in particular increases with rising temperature.

4. Apparatus (1) according to claim 2 or claim 3 wherein the measurement signals respectively output by the sensors (21) represent the respective current strength in the current-carrying conductor (29) and the electronic evaluation unit (17) is adapted to form an average value from the received measurement signals, to compare individual ones of the measurement signals to the average value formed, and to produce a blockage signal when a predetermined deviation from the average value formed is reached or exceeded.

5. Apparatus (1) according to one of the preceding claims wherein the sensors (21) each have a heat-conductive sensor element (23) arranged in a thermally conductive measurement cap (25), wherein the measurement cap (25) is adapted to mechanically isolate the sensor element (23) from the flow path.

6. Apparatus (1) according to one of the preceding claims wherein a connecting cable (29a, b) is connected to the sensor element (23) for signal output to the electronic evaluation unit (17).

7. Apparatus (1) according to claim 6 wherein the connecting cable (29a, b) is encased by a holding tube (27) and is preferably strain-relieved.

8. Apparatus (1) according to claim 11 wherein the holding tube (27) has a thermal conductivity which is reduced in comparison with the sensor element (23) and the connecting cable (29a, b).

9. Apparatus (1) according to one of claims 10 to 12 wherein the sensor (21) extends downstream in the flow path over a length in the range of 10 to 50 cm, particularly preferably in the range of 20 to 30 cm.

10. Apparatus (1) according to one of claims 6 to 9 wherein provided along a respective flow path is a hose connecting piece (31a, b) having a connecting portion (35a, b), on to which the fluid conduit (11) is pushed, wherein the sensor (21) is passed with a portion of the holding tube (27) through between the fluid conduit (11) and the hose connecting piece (31a, b) and wherein the fluid conduit (11) fluid-tightly encloses the hose connecting piece (31a, b) and the holding tube (27).

11. Apparatus (1) according to claim 10 wherein the respective hose connecting piece (31a, b) is arranged at one of the fluid outlets of the distribution device (5) or at one of the connecting portions (35a, b) for coupling to the application device (9) or at a location along the fluid conduit (11).

12. Apparatus (1) according to one of claims 6 to 9 wherein arranged along a respective flow path is a bore (33) which is adapted to the holding tube (27) and through which the sensor (21) is passed with a portion of the holding tube (27), wherein the bore (33) and the holding tube (27) preferably bear against each other in fluid-tight relationship.

13. Apparatus according to one of the preceding claims wherein the electronic evaluation unit is adapted to receive the measurement signals output by the sensors, compare them to each other and on the basis of signal deviations determined in that case to identify deviations in the distribution accuracy.

14. Apparatus according to one of the preceding claims comprising at least one clip (100, 200) which is fitted around one of the conduits (11), wherein the clip has a projection (101, 201) extending into the flow path through a corresponding opening (12) in the conduit (11).

15. Apparatus according to claim 14 wherein the clip (100) has an insertion portion for receiving the sensor (21) and a passage (115) means extending as far as the projection (101) for the sensor (21).

16. Apparatus according to claim 14 wherein the projection (221) of the clip (200) is in the form of a thermally conductive measurement cap (225) and preferably portion-wise or completely comprises a metal, in particular hard metal.

## Revendications

1. Appareil (1) de répartition d'un mélange de fluides, en particulier de lisier ou de purin, sur des surfaces agricoles (100), avec
- un dispositif de répartition (5), qui présente au moins une entrée de fluide (3) pouvant être raccordée à une alimentation en mélange de fluides et une pluralité de sorties de fluide (7),
- une pluralité de conduits de fluide (11) raccordés aux sorties de fluide pour la répartition du mélange de fluides sur une largeur de travail prédéterminée, dans lequel les conduits de fluide (11) présentent au niveau de leur extrémité en aval respectivement une section de raccordement (35b) pour le couplage avec un dispositif d'épandage (9), dans lequel le dispositif d'épandage (9) est aménagé en particulier pour la distribution du mélange de fluides en direction des surfaces cultivables (100),
- dans lequel respectivement une sortie de fluide (7) et le conduit de fluide (11) relié à la sortie de fluide définissent un chemin d'écoulement,
**caractérisé par** un dispositif (15) de détection d'obstruction dans chacun, plusieurs ou la totalité des chemins d'écoulement, lequel présente
- une pluralité de sondes (21), qui sont introduites respectivement dans un des chemins d'écoulement et sont conçues pour émettre un signal de mesure dépendant du débit dans le chemin d'écoulement, ainsi que
- une unité d'évaluation électronique (17), qui est aménagée pour recevoir les signaux de mesure émis par les sondes (21), les comparer entre eux et identifier chacun ou plusieurs des chemins d'écoulement comme obstrués en raison d'écarts de signaux constatés ce faisant, **caractérisé en ce que** les sondes (21) sont orientées en aval depuis le côté de leur entrée dans le chemin d'écoulement.

2. Appareil (1) selon la revendication 1,
dans lequel les sondes (21) présentent respectivement un conducteur parcouru par un courant (29) pouvant être sollicité avec une tension, qui est relié au chemin d'écoulement de manière thermoconductrice.

3. Appareil (1) selon la revendication 2,
dans lequel le conducteur parcouru par un courant (29) présente une résistance de contact, qui change en fonction de la température, en particulier augmente avec la hausse de la température.

4. Appareil (1) selon la revendication 2 ou 3,
dans lequel les signaux de mesure respectivement émis par les sondes (21) représentent l'intensité du courant respective dans le conducteur parcouru par un courant (29), et l'unité d'évaluation électronique (17) est aménagée pour former une valeur moyenne à partir des signaux de mesure reçus, comparer chacun des signaux de mesure avec la valeur moyenne formée, et émettre un signal d'obstruction lorsqu'un écart prédéterminé de la valeur moyenne formée est atteint ou dépassé.

5. Appareil (1) selon l'une quelconque des revendications précédentes,
dans lequel les sondes (21) présentent respectivement un élément capteur thermoconducteur (23), lequel est agencé dans un capuchon de mesure (25) conducteur thermique, dans lequel le capuchon de mesure (25) est aménagé pour isoler mécaniquement l'élément capteur (23) du chemin d'écoulement.

6. Appareil (1) selon l'une quelconque des revendications précédentes,
dans lequel un câble de raccordement (29a, b) est raccordé à l'élément capteur (23) pour l'émission de signal à l'unité d'évaluation électronique (17).

7. Appareil (1) selon la revendication 6,
dans lequel le câble de raccordement (29a, b) est enveloppé par une gaine de maintien (27) de préférence sans traction.

8. Appareil (1) selon la revendication 7,
dans lequel la gaine de maintien (27) présente une conductibilité thermique réduite par rapport à l'élément capteur (23) et au câble de raccordement (29a, b).

9. Appareil (1) selon l'une quelconque des revendications précédentes, dans lequel la sonde (21) s'étend en aval avec une longueur de l'ordre de 10 à 50 cm, en particulier de l'ordre de 20 à 30 cm dans le chemin d'écoulement.

10. Appareil (1) selon l'une quelconque des revendications 6 à 9,
dans lequel une tubulure (31a, b) avec une section de raccordement (35a, b) est prévue le long de respectivement un chemin d'écoulement, sur laquelle le conduit de fluide (11) est enfilé, dans lequel la sonde (21) est conduite à travers avec une section de la gaine de maintien (27) entre le conduit de fluide (11) et la tubulure (31a, b), et dans lequel le conduit de fluide (11) entoure la tubulure (31a, b) et la gaine de maintien (27) de manière étanche aux fluides.

11. Appareil (1) selon la revendication 10,
dans lequel respectivement la tubulure (31a, b) est agencée au niveau d'une des sorties de fluide du dispositif de répartition (5), ou au niveau d'une des sections de raccordement (35a, b) pour le couplage avec le dispositif d'épandage (9), ou à un endroit le long du conduit de fluide (11).

12. Appareil (1) selon l'une quelconque des revendications 6 à 9,
dans lequel un alésage (33) adapté à la gaine de maintien (27) est agencé le long de respectivement un chemin d'écoulement, par lequel la sonde (21) est conduite à travers avec une section de la gaine de maintien (27), dans lequel l'alésage (33) et la gaine de maintien (27) s'appuient l'un contre l'autre de préférence de manière étanche aux fluides.

13. Appareil selon l'une quelconque des revendications précédentes,
dans lequel l'unité d'évaluation électronique est aménagée pour recevoir les signaux de mesure émis par les sondes, les comparer entre eux, et identifier des écarts dans la précision de répartition en raison d'écarts de signaux constatés ce faisant.

14. Appareil selon l'une quelconque des revendications précédentes,
avec au moins un collier (100, 200), lequel est monté autour d'un des conduits (11), dans lequel le collier présente une saillie (101, 201) s'étendant dans le chemin d'écoulement à travers une ouverture correspondante (12) dans le conduit (11).

15. Appareil selon la revendication 14,
dans lequel le collier (100) présente une section d'introduction pour la réception de la sonde (21) et une traversée (115) s'étendant jusqu'à la saillie (101) pour la sonde (21).

16. Appareil selon la revendication 14,
dans lequel la saillie (221) du collier (200) est réalisée en tant que capuchon de mesure conducteur thermique (225) et est constituée de préférence par section ou entièrement d'un métal, en particulier d'un métal dur.
